# DEMANDE DE BREVET EUROPEEN

(11) **EP 4 080 332 A1**
(43) Date de publication de la demande: **26.10.2022**
(21) Numéro de dépôt: 21305517.1
(22) Date de dépôt: 19.04.2021
(51) Int. Cl.: G06F 3/01, G02B 27/00, H04N 5/222

(54) **CASQUE**

(71) Demandeur: DYNAMIXYZ, 35510 Cesson-Sévigné (FR)
(72) Inventeur: BRETON, Gaspard, 35510 Cesson-Sévigné (FR)
(74) Mandataire: HGF

(57) **Abrégé**

L'invention se rapporte à un dispositif (101) de capture d'image monté sur la tête pour capturer le mouvement facial d'un utilisateur. Le dispositif (101) comprend un casque (102) comportant une partie avant (103) destinée à reposer sur le front de l'utilisateur, une partie arrière (104) destinée à reposer sur l'arrière de la tête de l'utilisateur et des branches latérales (105) destinées à reposer chacune sur les côtés de la tête de l'utilisateur (H). Chaque branche latérale (105) comprend un support respectif (106) qui supporte une caméra respective (107). Le dispositif (101) comprend également une structure articulée (109) reliant la partie avant (103) à la partie arrière (104) pour se rapprocher du profil de la tête (H) de l'utilisateur.

## Description

La présente invention concerne généralement les casques, en particulier les casques adaptables. Plus spécifiquement, bien que non exclusivement, cette invention concerne un casque adaptable destiné à supporter un équipement de capture d'images pour capturer les mouvements du visage d'un utilisateur.

La capture de mouvements faciaux est le processus de conversion des mouvements du visage d'un acteur en une base de données numérique à l'aide d'un équipement de capture d'images et/ou de scanners laser. Cette base de données peut ensuite être utilisée pour produire des graphiques informatiques, des animations informatiques pour des films, des jeux ou des avatars en temps réel. Ce procédé permet d'obtenir une animation de personnage informatique plus réaliste et plus nuancée, car le mouvement du personnage infographique est dérivé des mouvements d'une personne réelle.

Une base de données de capture de mouvements faciaux décrit les coordonnées de points de référence sur le visage de l'acteur. La capture peut se faire en deux ou trois dimensions. La capture en deux dimensions peut être réalisée à l'aide d'une seule caméra et d'un logiciel de capture. Cela produit un suivi moins sophistiqué et ne permet pas de capturer des mouvements entièrement tridimensionnels, comme la rotation de la tête. La capture tridimensionnelle est réalisée à l'aide d'appareils à caméras multiples ou de systèmes de marquage laser. Ces systèmes sont beaucoup plus coûteux et compliqués à utiliser.

EP2340646A1 décrit un système de caméras montées sur la tête qui permet de capturer les mouvements du visage d'un acteur séparément, mais simultanément avec les mouvements du corps de l'acteur. Plusieurs caméras sont montées sur un casque porté par l'acteur via une paire de tiges montées de manière rotative sur le casque.

Ces systèmes connus de caméras montées sur la tête comportent généralement des sangles réglables, qui permettent de s'adapter aux différentes tailles et formes de la tête des acteurs. Cependant, ces dispositifs connus sont difficiles à fixer de manière rigide et reproductible sur la tête de l'acteur et peuvent parfois entraîner un mouvement indésirable des caméras par rapport au visage de l'acteur.

En outre, ces dispositifs classiques ne permettent pas de repositionner de manière identique les caméras par rapport au visage lorsque l'utilisateur installe à nouveau le casque après l'avoir retiré de manière temporaire. Ainsi, il est nécessaire de recalibrer le système de capture d'image à chaque fois que l'utilisateur souhaite retirer et installer à nouveau le casque, ce qui peut arriver plusieurs fois par jour.

Il serait donc avantageux de fournir un casque adaptable pour supporter l'équipement de capture d'image pour capturer le mouvement facial, qui atténue les problèmes avec les systèmes connus.

L'invention concerne un dispositif de capture d'image monté sur la tête pour capturer le mouvement facial d'un utilisateur, le dispositif comprenant un casque avec : au moins deux branches latérales, chacune étant destinée à reposer sur un des côtés de la tête de l'utilisateur, chaque branche latérale comprenant un support destiné à supporter au moins une caméra ; une partie avant destinée à reposer sur le front de l'utilisateur ; une partie arrière destinée à reposer sur l'arrière de la tête de l'utilisateur ; caractérisé en ce que le dispositif comprend également une structure articulée reliant la partie avant à la partie arrière pour se rapprocher du profil de la tête de l'utilisateur.

La présence d'une structure articulée qui se rapproche du profil de la tête d'un utilisateur facilite un repositionnement plus précis du dispositif, et des caméras montées sur le dispositif, lorsque celui-ci est réinstallé sur l'utilisateur après avoir été temporairement retiré. Cela atténue les problèmes de recalibrage susmentionnés.

La structure articulée peut comprendre au moins deux éléments, par exemple une pluralité d'éléments. Les éléments peuvent être connectés ou reliés entre eux, par exemple de manière pivotante et/ou en série. Les éléments peuvent être connectés ou reliés entre eux par des attaches ou des fixations. Les attaches ou les fixations peuvent permettre de régler ou d'ajuster la position angulaire des éléments les uns par rapport aux autres.

Le dispositif peut comprendre un coussin. Le coussin peut s'étendre le long d'au moins une partie de la structure articulée. Le coussin peut être monté sur un ou plusieurs ou sur chacun des éléments, par exemple pour supporter la structure articulée sur la tête de l'utilisateur.

Au moins un ou chaque élément peut comprendre un élément de support de coussin sur lequel le coussin peut être monté. Le ou chaque ou au moins un des éléments de support de coussin peut comprendre ou être une plaque de support de coussin.

Une extrémité, par exemple une première extrémité, du coussin peut être montée sur la partie avant. Une extrémité, par exemple une seconde extrémité, du coussin peut être montée sur la partie arrière.

Le coussin peut comprendre ou contenir une substance flexible, telle qu'une mousse ou un gel.

La partie arrière peut comprendre une sangle ou un cordon. La sangle ou le cordon de la partie arrière peut être connecté ou relié à au moins une ou à chaque branche latérale. La sangle ou le cordon de la partie arrière peut être élastique. La partie arrière peut comprendre au moins une fente de verrouillage. La fente de verrouillage peut servir à retenir de manière amovible une partie de la sangle ou du cordon élastique, par exemple pour permettre le réglage de sa longueur.

Le dispositif peut comprendre une partie supérieure, par exemple destinée à reposer sur le dessus de la tête de l'utilisateur. La partie supérieure peut comprendre un moyen de positionnement, par exemple pour positionner la structure articulée par rapport à la partie supérieure. Le moyen de positionnement peut comprendre un évidement, une découpe ou un réceptacle, par exemple pour recevoir une partie de la structure articulée, ou à l'intérieur duquel la structure articulée est reçue.

La partie supérieure peut comprendre une sangle ou un cordon. La sangle ou le cordon de la partie supérieure peut être connecté ou relié à au moins une ou à chaque branche latérale. La sangle ou le cordon de la partie supérieure peut avoir une longueur réglable. Au moins une ou chaque extrémité de la sangle ou du cordon de la partie supérieure peut être fixée ou fixable à l'une des branches latérales.

Au moins une ou chaque extrémité de la sangle ou du cordon de la partie supérieure peut être fixée de manière amovible à l'une des branches latérales, par exemple pour permettre le réglage de sa longueur. La ou chaque extrémité de la sangle ou du cordon de la partie supérieure peut être fixée de manière amovible à l'une des branches latérales par un dispositif de fixation, par exemple un dispositif de fixation fileté. La partie supérieure peut comprendre au moins une fente, par exemple sur au moins une partie de sa longueur. La partie supérieure peut comprendre une fente adjacente à la ou à chacune de ses extrémités à travers laquelle s'étend l'attache, par exemple pour permettre d'ajuster la longueur de la sangle ou du cordon.

La partie avant peut comprendre une sangle ou un cordon. La sangle ou le cordon de la partie avant peut être connecté ou relié à au moins une ou chaque branche latérale. La sangle ou le cordon de la partie avant peut avoir une longueur réglable. Au moins une ou chaque extrémité de la sangle ou du cordon de la partie avant peut être fixée ou fixable à l'une des branches latérales.

Au moins une ou chaque extrémité de la sangle ou du cordon de la partie avant peut être fixée de manière amovible à l'une des branches latérales, par exemple pour permettre le réglage de sa longueur. La ou chaque extrémité de la sangle ou du cordon de la partie avant peut être fixée de manière amovible à l'une des branches latérales par un dispositif de fixation, par exemple un dispositif de fixation fileté.

Au moins un ou chaque support peut être mobile, par exemple rotatif, par rapport à la branche latérale. Au moins une ou chaque branche latérale et/ou au moins un ou chaque support peuvent comprendre au moins un indicateur visuel, par exemple pour déterminer l'orientation du support qui y est monté.

Le dispositif peut comprendre au moins une caméra, qui peut être montée sur au moins l'un des supports. Le dispositif peut comprendre une caméra montée sur chaque support.

Le dispositif peut comprendre une paire de caméras opposées. Chaque caméra peut être positionnée latéralement par rapport au visage d'un utilisateur pour capturer des données d'image relatives à un côté respectif du visage de l'utilisateur.

Le dispositif peut comprendre un plan central, qui peut segmenter les côtés latéraux du dispositif. La ou au moins une ou chaque caméra peut être orientée de sorte que l'angle entre son plan image et le plan central soit inférieur à 45 degrés, par exemple inférieur à 30 degrés et de préférence inférieur à 20 degrés.

La ou chaque caméra peut être configurée pour être sensiblement alignée avec le nez de l'utilisateur.

La ou chaque caméra peut comprendre une caméra vidéo et/ou peut être configurée pour capturer des données numériques représentatives d'une ou plusieurs images. Le dispositif peut comprendre une mémoire ou un dispositif de mémoire pour enregistrer les données capturées par la ou les caméras. Le dispositif peut comprendre un processeur pour commander le fonctionnement de la ou des caméras et/ou de la mémoire. Le dispositif peut comprendre un ou plusieurs éléments ou dispositifs d'éclairage, par exemple pour éclairer le visage d'un utilisateur. Le processeur peut être utilisé pour commander le(s) élément(s) ou dispositif(s) d'éclairage.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

Des modes de réalisation de l'invention seront maintenant décrits à titre d'exemple uniquement en référence aux dessins ci-joints dans lesquels :
La figure 1 est une vue latérale d'un dispositif de capture d'images ;
La figure 2 est une vue de dessus du dispositif de la figure 1 ;

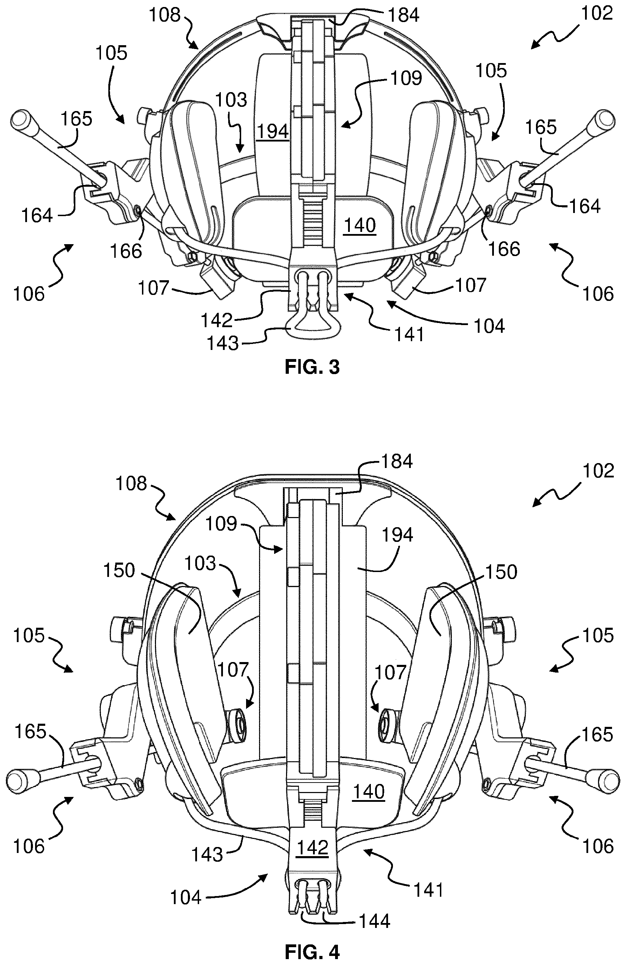

La figure 3 est une vue arrière du dispositif des figures 1 et 2 ;
La figure 4 est une vue arrière supérieure du dispositif des figures 1 à 3 ;

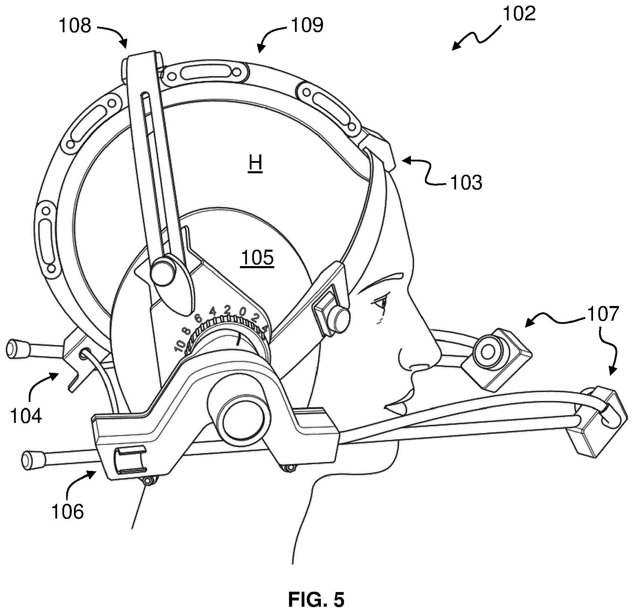

La figure 5 est une vue latérale similaire à celle de la figure 1 avec le dispositif monté sur la tête d'un utilisateur.

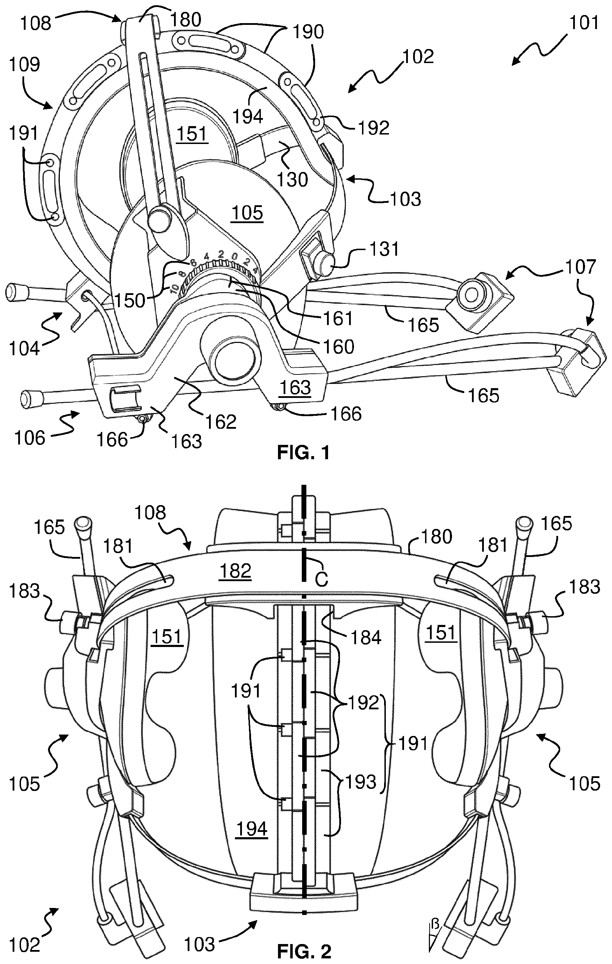

En se référant maintenant à la figure 1, on voit un dispositif 101 de capture d'images monté sur la tête pour capturer le mouvement facial d'un utilisateur. Le dispositif comprend un casque 102 avec une partie avant 103 destinée à reposer sur le front de l'utilisateur, une partie arrière 104 destinée à reposer sur l'arrière de la tête de l'utilisateur et une paire de branches latérales 105, chacun destiné à reposer sur les côtés de la tête de l'utilisateur. Chaque branche latérale 105 comprend un support 106 sur lequel est montée une caméra 107. Le dispositif 101 comprend également une partie supérieure 108 destinée à reposer sur le dessus de la tête H de l'utilisateur et une structure articulée 109 reliant la partie avant 103 à la partie arrière 104 pour se rapprocher du profil de la tête de l'utilisateur.

Dans cet exemple, la partie avant 103 comprend une sangle en plastique semi-rigide 130. Chaque extrémité de la sangle 130 est fixée de manière amovible à l'une des branche latérales 105 respectifs par une pince 131 pour permettre le réglage de sa longueur.

La partie arrière 104 comprend une plaque de support de coussin 140 et un mécanisme de réglage 141 fixé à la face arrière de la plaque de support de coussin 140. Le mécanisme de réglage 141 comprend un élément de verrouillage 142 qui peut être rapproché et éloigné par paliers de la structure articulée 109. La partie arrière 104 comprend également un cordon élastique 143 fixé à chaque extrémité à l'une des branches latérales 105 respectives. Le cordon élastique 143 s'étend également à travers une paire de trous dans l'élément de verrouillage 142 pour former une boucle. L'élément de verrouillage 142 comprend une paire de fentes de verrouillage 144 ayant une partie rétrécie pour retenir de manière amovible les parties respectives du cordon élastique 143 afin de permettre le réglage de sa longueur effective.

Chaque branche latérale 105 comprend une série d'indicateurs visuels 150, sous forme de chiffres dans cet exemple. Chaque support 106 comprend un moyeu 160 avec un indicateur visuel 161, sous la forme d'une ligne, qui coopère avec les indicateurs visuels 150 de la branche latérale 105 sur lequel il est monté, pour fournir une indication de l'orientation du support 106. Ceci facilite la configuration du casque 102, et permet également de synchroniser l'orientation des supports 106 de manière simple. Chaque branche latérale 105 comprend également un coussin 151, qui est rempli d'un gel dans cet exemple.

Chaque support 106 comprend également une paire de jambes 162 qui divergent l'une de l'autre selon un angle oblique. Les jambes 162 ont des pieds respectifs 163 qui sont coaxiaux l'un à l'autre, mais qui s'étendent à l'écart l'un de l'autre. Chaque pied 163 comprend un trou 164 s'étendant sur sa longueur à travers lequel s'étend une tige 165 du support 106. Chaque jambe 162 est formée de deux parties, qui peuvent être serrées ou desserrées par des boulons 166 et forment ensemble une pince pour fixer de manière amovible la tige 165 en position.

L'une des caméras 107 est montée à l'extrémité de chaque tige 165 et est orientée vers l'intérieur, vers l'autre caméra 107 mais selon un angle par rapport à celle-ci. Plus particulièrement, chaque caméra 107 est orientée de telle sorte que son plan image fait un angle β par rapport à un plan central C segmentant les faces latérales du dispositif 101. Dans cet exemple, l'angle β est d'environ 15 degrés, mais il est envisagé que l'angle puisse être supérieur ou inférieur à cet angle. Par exemple, l'angle peut être de 20 degrés, 30 degrés ou même 45 degrés. De même, l'angle peut être de 10 degrés, 5 degrés ou zéro degré.

La partie supérieure 108 comprend une sangle en plastique semi-rigide 180 avec une paire de fentes 181, dont chacune s'étend à partir d'une extrémité adjacente et se termine au niveau d'une partie centrale 182 de la sangle 180. Chaque côté de la sangle 180 est fixé de manière amovible à l'une des branches latérales 105 respectives par une attache filetée 183 qui s'étend à travers l'une des fentes 181 et serre de manière amovible la sangle 180 en position pour permettre le réglage de sa longueur. La partie supérieure 108 comprend également une fente de positionnement 184 qui reçoit et positionne la structure articulée 109 par rapport à la partie supérieure 108.

La structure articulée 109 comprend une pluralité d'éléments 190 reliés entre eux de manière pivotante en série par des attaches 191, qui permettent d'ajuster la position angulaire des éléments 190 les uns par rapport aux autres. De cette manière, la structure articulée 109 forme une sorte de colonne vertébrale qui s'étend le long du plan central C du casque 102.

Chaque élément 190 comprend une barre courte 192 à extrémités arrondies, traversée par les attaches 191, et une plaque de support de coussin 193. Un coussin 194 est prévu, qui s'étend le long de la structure articulée 109 de la partie avant 103 à la partie arrière 104, pour supporter le casque 102 sur la tête de l'utilisateur. Le coussin 194 est monté à une première de ses extrémités sur la partie avant 103 et à une seconde de ses extrémités sur la plaque de support du coussin 140 de la partie arrière 104. Le coussin 194 est également monté sur la plaque de support du coussin 193 de chaque élément 190 sur sa longueur. Dans cet exemple, le coussin 194 est rempli d'un gel.

L'homme du métier appréciera que plusieurs variantes des modes de réalisation précités soient envisageables sans sortir du cadre de l'invention.

## Revendications

1. Un dispositif de capture d'image monté sur la tête pour capturer le mouvement facial d'un utilisateur, le dispositif comprenant un casque avec :
au moins deux branches latérales, chacune étant destinée à reposer sur un des côtés de la tête de l'utilisateur, chaque branche latérale comprenant un support destiné à supporter au moins une caméra ;
une partie avant destinée à reposer sur le front de l'utilisateur ;
une partie arrière destinée à reposer sur l'arrière de la tête de de l'utilisateur ;
**caractérisé en ce que** le dispositif comprend également une structure articulée reliant la partie avant à la partie arrière pour se rapprocher du profil de la tête de l'utilisateur.

2. Dispositif selon la revendication 1, dans lequel la structure articulée comprend une pluralité d'éléments connectés en série de manière pivotante par des attaches qui permettent de régler la position angulaire des éléments les uns par rapport aux autres.

3. Dispositif selon la revendication 2 comprenant un coussin qui s'étend le long d'au moins une partie de la structure articulée et qui est monté sur chacun des éléments pour supporter la structure articulée sur la tête de l'utilisateur.

4. Dispositif selon la revendication 3, dans lequel chaque élément comprend une plaque de support de coussin sur laquelle le coussin est monté.

5. Dispositif selon la revendication 3 ou de la revendication 4, dans lequel dans lequel une première extrémité du coussin est montée sur la partie avant et une seconde extrémité du coussin est montée sur la partie arrière.

6. Dispositif selon l'une quelconque des revendications 3 à 5, dans lequel le coussin contient un gel.

7. Dispositif selon l'une quelconque des revendications précédentes, dans lequel la partie arrière comprend une sangle ou un cordon connecté à chaque branche latérale.

8. Dispositif selon la revendication 7, dans lequel la sangle ou le cordon de la partie arrière est élastique et la partie arrière comprend au moins une fente de verrouillage pour retenir de manière amovible une partie de la sangle ou du cordon élastique pour permettre le réglage de sa longueur.

9. Dispositif selon l'une quelconque des revendications précédentes comprenant une partie supérieure destinée à reposer sur le dessus de la tête de l'utilisateur, dans lequel la partie supérieure comprend un moyen de positionnement pour positionner la structure articulée par rapport à la partie supérieure.

10. Dispositif selon la revendication 9, dans lequel la partie supérieure comprend une sangle ou un cordon connecté à chaque branche latérale et ayant une longueur réglable.

11. Dispositif selon la revendication 10, dans lequel chaque extrémité de la sangle ou du cordon de la partie supérieure est fixée de manière amovible à l'une des branches latérales pour permettre le réglage de sa longueur.

12. Dispositif selon l'une quelconque des revendications précédentes, dans lequel la partie avant comprend une sangle ou un cordon connecté à chaque branche latérale et ayant une longueur réglable.

13. Dispositif selon la revendication 12, dans lequel chaque extrémité de la sangle ou du cordon de la partie avant est fixée de manière amovible à l'une des branche latérales pour permettre le réglage de sa longueur.

14. Dispositif selon l'une quelconque des revendications précédentes, dans lequel chaque support est rotatif par rapport à la branche latérale, chaque branche latérale et/ou chaque support comprenant au moins un indicateur visuel pour déterminer l'orientation du support.

15. Dispositif selon l'une quelconque des revendications précédentes comprenant une caméra montée sur chaque support.
